# EUROPÄISCHE PATENTSCHRIFT

(11) **EP 2 134 994 B1**
(45) Veröffentlichungstag und Bekanntmachung des Hinweises auf die Patenterteilung: **28.11.2018**
(21) Anmeldenummer: 08749512.3
(22) Anmeldetag: 02.04.2008
(51) Int. Cl.: F16K 15/03, F16K 15/14, A47L 15/42, D06F 39/08

(54) **VORRICHTUNG ZUM SPERREN EINES FLUIDDURCHTRITTS DURCH EIN ROHRFÖRMIGES TEIL MITTELS EINES RÜCKSCHLAGVENTILS, INSBESONDERE IN EINEM HAUSGERÄT**
DEVICE FOR BLOCKING FLUID PASSAGE THROUGH A TUBULAR PART BY MEANS OF A CHECK VALVE, PARTICULARLY IN A HOUSEHOLD APPLIANCE
DISPOSITIF DE BLOCAGE D'UN PASSAGE DE FLUIDE PAR UNE PARTIE EN FORME DE CONDUIT AU MOYEN D'UN CLAPET ANTIRETOUR, EN PARTICULIER DANS UN APPAREIL MENAGER

(30) Priorität: 12.04.2007 DE 102007017283
(43) Veröffentlichungstag der Anmeldung: 23.12.2009
(73) Patentinhaber: BSH Hausgeräte GmbH, 81739 München (DE)
(72) Erfinder: BÜSING, Johannes, 86494 Emersacker (DE)
(86) Internationale Anmeldenummer: PCT/EP2008/053921
(87) Internationale Veröffentlichungsnummer: WO 2008/125492

(56) Entgegenhaltungen:
- EP-A- 0 854 311
- DE-A1- 3 715 285
- DE-U1-202005 016 282
- FR-A- 2 371 624
- FR-A- 2 372 363
- JP-A- 10 267 143
- US-A- 3 628 565
- US-A- 3 814 124
- US-A- 5 364 244

## Beschreibung

Die Erfindung betrifft eine Vorrichtung zum Sperren eines Fluiddurchtritts in einer festgelegten Richtung durch ein insbesondere in einem mit einem Fluid arbeitenden Hausgerät vorgesehenes rohrförmiges Teil, durch das das Fluid in zu der festgelegten Richtung entgegengesetzten Richtung hindurchleitbar ist, mit einem Rückschlagventil, welches ein Dichtungsglied und einen als Ventilsitz dienenden Anlagebereich aufweist, der in einem Fluiddurchgang des rohrförmigen Teiles gebildet ist. Die Erfindung bezieht sich ferner auf ein Hausgerät, welches mit einem Fluid arbeitet, und insbesondere auf eine Geschirrspülmaschine mit einer Vorrichtung, wie sie vorstehend angegeben ist.

Vorrichtungen der vorstehend genannten Art, die mit einem Rückschlagventil ausgestattet sind, werden in mit einem Fluid arbeitenden Geräten, insbesondere in Hausgeräten eingesetzt, um eine Fluidströmung in lediglich einer Fluidrichtung in einem das jeweilige Rückschlagventil enthaltenden Fluiddurchgang zu ermöglichen. In der zu der betreffenden Strömungsrichtung entgegengesetzten Richtung muss das jeweilige Rückschlagventil indessen dichtend wirken, so dass in der betreffenden Gegenrichtung keine Fluidströmung möglich ist. Dies setzt einen exakten Passsitz des jeweiligen Dichtungsgliedes an einem zugehörigen Anlagebereich voraus. Es sei angemerkt, dass unter einem Fluid hier eine Flüssigkeit oder ein Gas verstanden wird.

Bei einer bekannten Vorrichtung der vorstehend betrachteten Art (DE 698 18 391 T2) ist in einem Ablaufverschlusssystem einer Geschirrspülmaschine ein Verschlussrückschlagventil vorgesehen, welches sich an einem Auslass einer Pumpenkammer befindet und dabei zwischen einer geschlossenen Position und einer geöffneten Position auf eine Druckdifferenz zwischen seinen beiden Seiten bewegbar ist. Das betreffende Verschlussrückschlagventil besteht aus einem durch eine Pumpenkammer gebildeten Tragteil mit einer Ablauföffnung, an die sich ein rohrförmiges Teil des Ablaufverschlusssystems anschließt, und einem mit dieser Ablauföffnung verbundenen klappbaren tellerförmigen Ventilelement, welches an einem um die betreffende Ablauföffnung vorgesehenen Ventilsitz dichtend anliegt. Diese Konstruktion bedingt allerdings eine Montagetechnik für die Realisierung des genannten Verschlussrückschlagventils, die zuweilen als unerwünscht angesehen wird. Das erwähnte Ventilelement muss nämlich in der erwähnten Ablauföffnung der relativ voluminösen und sperrigen Pumpenkammer montiert werden, was arbeitsaufwendig ist. Außerdem sind an die Passgenauigkeit der das Verschlussrückschlagventil bildenden Elemente relativ hohe Anforderungen zu stellen. Der Einsatz einer von der erwähnten Pumpenkammer getrennten Vorrichtung zur Bildung eines Rückschlagventils ist bei dem betreffenden bekannten Ablaufverschlusssystem indessen nicht vorgesehen.

Zum Sperren von Flüssigkeitsdurchgängen in Geschirrspülmaschinen ist es auch schon bekannt (DE 34 43 166 C2, DE 100 17 243 A1), in den betreffenden Flüssigkeitsdurchgängen Rückschlagventile vorzusehen, die jeweils eine von einem Ventilsitz einer Rohrleitung aufgenommene Kugel umfassen, welche an ihrem Ventilsitz dichtend anliegt. Durch die so gebildeten Rückschlagventile kann dann eine Flüssigkeit jeweils nur in einer Strömungsrichtung durch das jeweilige Rückschlagventil strömen; in der dazu entgegengesetzten Richtung versperrt das jeweilige Rückschlagventil eine Flüssigkeitsströmung. Solche Rückschlagventile werden wegen der dabei jeweils erforderlichen, mit hoher Genauigkeit zu schleifenden Ventilkugeln zuweilen in ihrer Herstellung als zu aufwendig und zu teuer angesehen. Es besteht daher der Wunsch, ein rohrförmiges Teil, durch welches ein Fluid hindurchzuleiten ist, mittels eines einfach herzustellenden und einfach zu montierenden Rückschlagventils so sicher abzudichten, dass ein Fluiddurchtritt durch das betreffende rohrförmige Teil in lediglich einer Strömungsrichtung ermöglicht, in der Gegenrichtung dazu jedoch sicher gesperrt ist.

Weiterhin ist aus der DE 20 2005 016 282 U1 ein Rückschlagventil bekannt, bei dem ein beweglicher Verschlusskopf mittels einem tonnenförmigen Druckfederelement federnd gegen einen gehäusefesten Ventilsitz gedrückt ist. Das tonnenförmige Druckfederelement ist an seinem dem Verschlusskopf abgewandten Ende mittels ein Stützelementes gelagert. An seinem dem Verschlusskopf zugewandten Ende hingegen ist es an dem Verschlusskopf festgelegt und durch den Verschlusskopf in radialer Richtung geführt. Dabei müssen bei der Herstellung des derartigen Rückschlagventils die Sollabmessungen des Ventilgehäuses, des Stützelementes, des tonnenförmigen Druckfederelementes sowie des Verschlusskopfes exakt eingehalten werden, damit das tonnenförmige Druckfederelement mit der vorgesehenen Federkraft gegen den gehäusefesten Ventilsitz gedrückt ist. Zudem entsteht bei einer Öffnungsbewegung ebenso wie bei einer Schließbewegung des Verschlusskopfs zwischen dem Umfang des Verschlusskopfs und dem Ventilgehäuse eine starke Reibung, so dass ein sicheres Öffnen bzw. Schließen des Ventils nur bei höheren Drücken des Fluids gewährleistet ist. Bei geringeren Drücken, welche beispielsweise an einem Auslass einer Pumpenkammer einer Geschirrspülmaschine üblich sind, ist eine zuverlässige Funktion eines derartigen Ventils nicht gewährleistet.

Der Erfindung liegt daher die Aufgabe zugrunde, einen Weg zu zeigen, wie bei einer Vorrichtung der eingangs genannten Art und bei einem diese Vorrichtung enthaltenden Hausgerät ein einfach zu realisierendes Rückschlagventil zum sicheren Abdichten eines rohrförmigen Teiles zu gestalten ist.

Gelöst wird die vorstehend aufgezeigte Aufgabe bei einer Vorrichtung der eingangs genannten Art erfindungsgemäß dadurch, dass das rohrförmige Teil als Aufnahmeteil für die Aufnahme eines elastisch zusammendrückbaren hohlzylindrischen Einsetzkörpers derart ausgebildet ist, dass der in das Aufnahmeteil eingesetzte Einsetzkörper an dem den Anlagebereich umgebenden Bereich des Aufnahmeteiles anliegt, wobei der Einsetzkörper in dem Aufnahmeteil so fixiert ist, dass er in seiner axialen Richtung elastisch zusammengedrückt ist, wobei der eingesetzte Einsetzkörper an seinem dem Anlagebereich des Fluiddurchgangs gegenüberliegenden Ende das Dichtungsglied trägt.

Hierdurch kann das Dichtungsglied durch den in dem Aufnahmeteil elastisch zusammengedrückten und dabei in seiner axialen Lage fixierten Einsetzkörper an dem Anlagebereich derart dichtend anliegen, dass ein Fluiddurchtritt lediglich in Richtung von dem Aufnahmeteil zu dem Einsetzkörper hin ermöglicht, in der die genannte festgelegte Richtung darstellenden Gegenrichtung dazu jedoch sicher gesperrt ist.

Die Erfindung bringt den Vorteil mit sich, dass durch sie eine vom eingesetzten Material besonders aufwandsarme und aus fertigungstechnischer Sicht besonders einfach herzustellende Vorrichtung mit einem Rückschlagventil realisierbar ist, mit dem der Fluiddurchgang des erwähnten Aufnahmeteiles stets sicher abdichtbar ist. Das Durchgangsglied braucht dabei, um seine Dichtungsfunktion stets beizubehalten, nicht künstlich z.B. durch Tempern gealtert zu werden. Außerdem ermöglicht die Vorrichtung gemäß der Erfindung in besonders einfacher Weise eine leichte Auswechslung des Einsetzkörpers mit dem Dichtungsglied, sollte dieses z.B. infolge Abnutzung seine Dichtungsfunktion nicht mehr zufriedenstellend erfüllen können. Die dabei vorzunehmende Demontage des nicht mehr zufrieden stellenden Einsetzkörpers mit Dichtungsglied kann in vorteilhafter Weise ohne Verwendung von Werkzeug erfolgen, nämlich lediglich durch manuelles Zusammendrücken und Herausziehen des betreffenden Einsetzkörpers mit dem Dichtungsglied.

Die Erfindung bringt ferner den Vorteil mit sich, dass das Aufnahmeteil im Bereich seines Fluiddurchgangs lediglich den als Ventilsitz dienenden Anlagebereich des Rückschlagventils aufweist und dass das Dichtungsglied des betreffenden Rückschlagventils von dem Einsetzkörper getragen wird, der in das Aufnahmeteil eingesetzt und in diesem so fixiert ist, dass er in seiner axialen Richtung elastisch zusammengedrückt ist. Dadurch lässt sich das Rückschlagventil mit Einzelteilen realisieren, für die keine besonderen Passgenauigkeiten gefordert sind. Überdies lassen sich in vorteilhafter Weise auch relativ große Toleranzen innerhalb eines bestimmten festgelegten Toleranzbereiches vor allem in der Länge des Einsetzkörpers und auch in der Länge des Abstands zwischen dem den als Ventilsitz dienenden Anlagebereich des Aufnahmeteiles umgebenden Aufnahmeteilbereich und der Fixierung bzw. Fixierungsposition des Einsetzkörpers in dem Aufnahmeteil vollständig ausgleichen, so dass stets ein dichtend schließendes Rückschlagventil zwischen dem Aufnahmeteil und dem Einsetzkörper zur Verfügung steht. Bezüglich des Dichtungsgliedes ist anzumerken, dass dieses sehr genau tolerierbar an dem Einsetzkörper in Bezug auf dessen dem Anlagebereich des Aufnahmeteiles gegenüberliegenden Ende angebracht werden kann. Auch der Anlagebereich des Aufnahmeteiles kann in seiner Tiefe genau tolerierbar gebildet werden, so dass bei Anlage des Einsetzkörpers mit seinem das Dichtungsglied aufweisenden Ende beispielsweise an dem den Anlagebereich umgebenden Bereich des Aufnahmeteiles eine ausgezeichnete Anlage der Dichtfläche des Dichtungsgliedes an dem genannten Anlagebereich erzielt werden kann.

Dabei ist vorzugsweise vorgesehen, dass der Einsetzkörper an seinem dem Anlagebereich des Fluiddurchgangs gegenüberliegenden Ende das Dichtungsglied schwenkbar trägt. Diese Anordnung erlaubt es, dass im geöffneten Zustand auch Grobkörper durchtreten können, da es mit dieser Anordnung möglich ist, den Querschnitt des rohrförmigen Teils zu 80% bis 90% freizugeben, sodass auch Gegenstände wie z.B. Zahnstocher ungehindert durchtreten können. Es sind jedoch auch andere Anordnungen denkbar, bei denen das Dichtungsglied bspw. entlang einer Achse verschiebbar angeordnet ist.

Von Vorteil ist weiterhin, dass das Dichtungsglied in dem Einsetzkörper so angeordnet sein kann, dass es während des Transports und der Montage geschützt ist. Dadurch kann der Einsetzkörper mit seinem Dichtungsglied problemlos zur Montage als Schüttgut angeliefert werden, ohne dass es dabei zu Beschädigungen des Dichtungsgliedes kommen kann.

Zweckmäßigerweise ist der Einsetzkörper in seiner axialen Richtung in dem Aufnahmeteil durch eine Rastverbindungsanordnung fixiert. Dies bringt den Vorteil einer besonders einfachen Fixierung des Einsetzkörpers in dem Aufnahmeteil mit sich.

Vorzugsweise ist die betreffende Rastverbindungsanordnung dadurch gebildet, dass in dem Aufnahmeteil wenigstens ein Aufnahmenutbereich vorgesehen ist, in den der Einsetzkörper mit einem entsprechenden Rastnasenteil eingerastet ist. Dies stellt eine besonders einfache Rastverbindungsanordnung dar. Es ist aber auch möglich, den jeweiligen Aufnahmenutbereich im Einsetzkörper und das jeweilige Rastnasenteil im Aufnahmeteil vorzusehen.

Andere einfache Rastverbindungsanordnungen ergeben sich gemäß weiterer zweckmäßiger Ausgestaltung der vorliegenden Erfindung zum einen dadurch, dass der Aufnahmenutbereich im Innenumfang des Aufnahmeteiles als geschlossene Nut vorgesehen ist und dass das Rastnasenteil durch eine von dem Außenumfang des Einsetzkörpers getragene, vorzugsweise umlaufende Rastnase gebildet ist, und zum anderen dadurch, dass alternativ dazu die Aufnahmenut im Außenumfang des Einsetzkörpers als geschlossene Nut gebildet ist und dass das Rastnasenteil durch eine vom innenumfang des Aufnahmeteiles getragene, vorzugsweise umlaufende Rastnase gebildet ist.

Gemäß einer noch weiteren zweckmäßigen Ausgestaltung der vorliegenden Erfindung ist der elastisch zusammendrückbare hohlzylindrische Einsetzkörper durch einen elastisch zusammendrückbaren hohlzylindrischen Stauchkörper mit in dessen axialer Richtung voneinander in Abstand vorgesehenen und zueinander versetzt quer zur Stauchkörperlängsrichtung verlaufenden Querschlitzen gebildet. Hierdurch ergibt sich der Vorteil, dass der betreffende Einsetzkörper durch einen besonders einfach herzustellenden Stauchkörper gebildet werden kann, an dessen einem Ende das Dichtungsglied des erwähnten Rückschlagventils leicht anbringbar ist.

Vorzugsweise sind bei der vorstehend betrachteten zweckmäßigen Ausgestaltung der vorliegenden Erfindung unmittelbar in Stauchkörperlängsrichtung benachbarte Querschlitze in dem elastisch zusammendrückbaren hohlzylindrischen Stauchkörper voneinander versetzt. Auf diese Weise wird eine hinsichtlich der Elastizität des Stauchkörpers in dessen axialer Richtung besonders wirksame Zusammendrückbarkeit sichergestellt. Vorzugsweise überlappen sich dabei einander unmittelbar benachbarte Querschlitze in ihrer Längsrichtung.

Zweckmäßigerweise weist der Stauchkörper im Bereich der Rastverbindungsanordnung wenigstens einen in axialer Stauchkörperrichtung verlaufenden Längsschlitz auf. Vorzugsweise sind jedoch mehrere derartige Längsschlitze und zweckmäßigerweise sogar paarweise vorgesehen. Durch jede dieser zweckmäßigen Weiterbildungen der vorliegenden Erfindung ergibt sich der Vorteil, dass der Stauchkörper im Bereich der Rastverbindungsanordnung leicht in seiner radialen Richtung elastisch zusammendrückbar ist, so dass die betreffende Rastverbindungsanordnung leicht hergestellt werden kann.

Von Vorteil bei der zuletzt betrachteten zweckmäßigen Weiterbildung der vorliegenden Erfindung ist es ferner, wenn der jeweilige Längsschlitz zu dem das Dichtungsglied enthaltenden einen Ende des Stauchkörpers gegenüberliegenden Stauchkörperende offen ist. In diesem Fall lässt sich der betreffende Endbereich des Stauchkörpers besonders leicht in radialer Richtung elastisch zusammendrücken.

Von ganz besonderem Vorteil ist es gemäß noch weiterer zweckmäßiger Ausgestaltung der Erfindung, wenn das Dichtungsglied tellerförmig ausgebildet und an einem zumindest angenähert runden Anlagebereich des Aufnahmeteiles anliegt. Dabei besteht das Dichtungsglied vorzugsweise aus einem weichelastischen Material, wie aus einem weichelastischen Kunststoff, und das Aufnahmeteil besteht vorzugsweise aus einem harten oder zähelastischen Material, wie aus einem harten oder zäheelastischen Kunststoff, an dem bzw. dessen Anlagebereich das betreffende Dichtungsteil dichtend anliegt. Auf diese Weise lässt sich ein hinsichtlich seiner Abdichtungsfunktion besonders wirksames Rückschlagventil mit Einzelteilen realisieren, für die keine allzu großen Passgenauigkeiten zu fordern sind.

Zweckmäßigerweise ist eine Vorrichtung gemäß der vorliegenden Erfindung in einem Hausgerät enthalten, und zwar insbesondere in einer Geschirrspülmaschine und vorzugsweise in deren sogenannten Pumpentopfbereich.

Anhand einer Zeichnung wird die Erfindung nachstehend beispielhaft näher erläutert.

In der Zeichnung zeigen
- Fig. 1: in einer ausschnittweisen Schnittansicht eine Vorrichtung gemäß einem bevorzugten Ausführungsbeispiel der vorliegenden Erfindung und
- Fig. 2: die in Fig. 1 dargestellte Vorrichtung nach erfolgter Drehung um 90° um deren Längsachse.

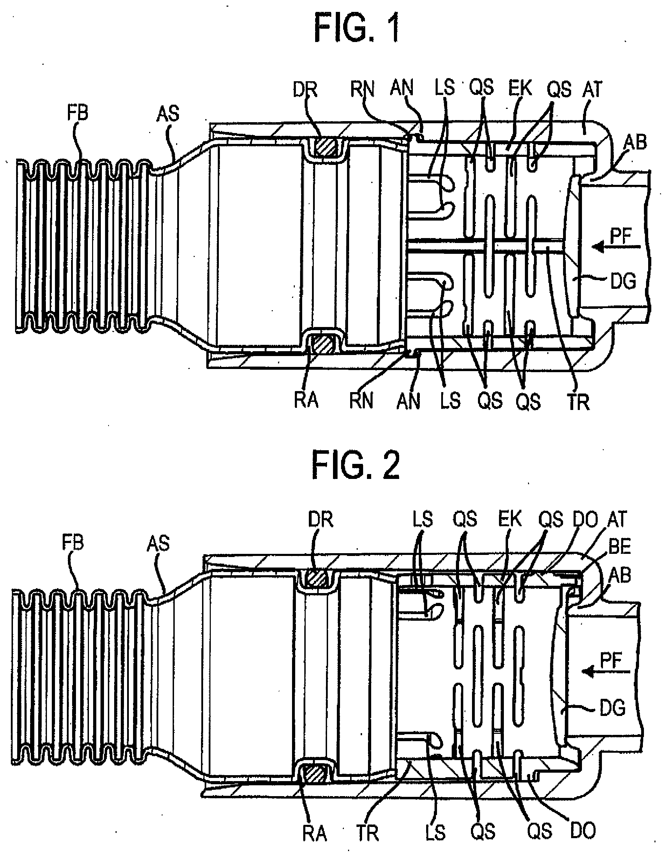

Die in Fig. 1 und 2 jeweils in einer ausschnittweisen Schnittansicht gezeigte Vorrichtung gemäß einem Ausführungsbeispiel der Erfindung dient zum Sperren eines Fluiddurchtritts in einer festgelegten Richtung durch ein insbesondere in einem mit einem Fluid arbeitenden Hausgerät vorgesehenes rohrförmiges Teil, welches durch ein Aufnahmeteil AT für die Aufnahme eines nachstehend noch näher zu betrachtenden Einsetzkörpers EK gebildet ist. Durch dieses Aufnahmeteil AT, das aus einem formstabilen Material, wie aus einem Metall oder einem harten oder zähelastischen Kunststoff bestehen kann, soll ein Fluid in der durch einen in Fig. 1 und 2 jeweils eingetragenen Pfeil PF angegebenen Richtung hindurchleitbar sein, während in der dazu entgegengesetzten Richtung ein Fluiddurchtritt sicher gesperrt sein soll und auch ist. Dabei erlaubt die Vorrichtung in geöffneten Zustand auch den Durchtritt von Grobkörpern, da der Querschnitt des rohrförmigen Teils im geöffneten Zustand zu ca. 80% bis 90 % freigegeben ist, wenn die Vorrichtung z.B. in einer Geschirrspülmaschine eingesetzt wird.

Das Aufnahmeteil AT kann insbesondere durch einen Abgangsstutzen einer Laugenpumpe in einem Hausgerät, und zwar insbesondere in einer Geschirrspülmaschine gebildet sein. Das betreffende Aufnahmeteil AT ist hier durch eine im wesentlichen zylinderförmig ausgebildete Aufnahmebüchse gebildet, die in ihrem in Fig. 1 und 2 jeweils rechts dargestellten Teil einen vorstehenden Anlagebereich AB für die Anlage eines in dem Einsetzkörper EK aufgenommenen Dichtungsgliedes DG aufweist, welches zusammen mit dem betreffenden Anlagebereich AB ein Rückschlagventil bildet. Das Dichtungsglied DG ist vorzugsweise als tellerförmiges flaches Schwenkteil bzw. als Klappe mit einem kreisförmigen Dichtungsbereich ausgebildet, mit dem es an dem eine entsprechende Kreisform bzw. eine zumindest angenähert runde Anlageform besitzenden Anlagebereich AB des Aufnahmeteiles AT anliegt, nachdem - wie nachstehend noch ersichtlich werden wird - der Einsetzkörper EK als mit dem Dichtungsglied vormontiertes einziges Teil in das Aufnahmeteil AT eingesetzt und in seiner axialen Lage in Bezug auf das Aufnahmeteil fixiert ist. Nach dem Einsetzen in das Aufnahmeteil AT liegt der Einsetzkörper EK mit seinem das Dichtungsglied DG tragenden Ende an einem den Anlagebereich AB des Aufnahmeteiles AT umgebenden Bereich an, wie dies aus Fig. 1 und 2 ersichtlich ist. Durch im Bereich des Dichtungsgliedes DG vorgesehene, radial abstehende Körperteile, sogenannte Dome DO, kann der Einsetzkörper EK mit seinem Dichtungsglied DG in dem Aufnahmeteil AT exakt zentriert werden.

In das Aufnahmeteil AT ist - wie dies aus Fig. 1 und 2 ersichtlich ist - von dessen linken Ende aus der Einsetzkörper EK eingesetzt, der ein elastisch zusammendrückbarer hohlzylindrischer Einsetzkörper EK ist, welcher an bzw. in seinem dem erwähnten Anlagebereich AB des Aufnahmeteils AT zugewandten Ende das Dichtungsglied DG schwenk- bzw. klappbar trägt Das Dichtungsglied DG, das dabei mit seinem Schwenkteil im Innern des Einsetzkörpers EK geschützt untergebracht ist, besteht vorzugsweise aus einem weichelastischen Material, wie z.B. aus Flüssigsilikon, TPE oder Gummi. Der Einsetzkörper EK besteht demgegenüber aus einem härteren bzw. zähen Material, wie aus einem zähelastischen Kunststoff.

Das Dichtungsglied DG ist dabei, wie dies aus Fig. 2 näher ersichtlich ist mit seinem Schwenkteil bzw. seiner Ventilklappe an einem relativ schmalen Befestigungsbereich BE des Einsetzkörpers EK fest angebracht, beispielsweise durch Anformung oder durch eine Klebverbindung. Das Dichtungsglied kann überdies in einem Zweikomponenten-Spritzverfahren oder in sogenannter Umsetz- oder Einlegetechnik an dem Einsetzkörper EK angebracht sein. Die mit sehr genauer Montagetoleranz erreichbare Verbindung zwischen dem Dichtungsglied DG und dem Einsetzkörper EK ist dabei vorzugsweise so ausgelegt, dass das Dichtungsglied DG mit seinem Schwenkteil in dem Einsetzkörper EK vorspannungslos untergebracht ist, also in dem Einsetzkörper EK senkrecht zu dessen Längsachse verläuft. Es ist aber auch möglich, dem Schwenkteil des Dichtungsgliedes DG eine von dem Einsetzkörper EK weg gerichtete Vorspannung zu geben. Diese Vorspannung legt dann gegenüber dem Einsatz eines spannungslos vorgesehenen Dichtungsgliedes DG einen höheren Druck fest, ab dem das aus dem Anlagebereich AB des Aufnahmeteils AT und dem Dichtungsglied DG bestehende Rückschlagventil durch eine Fluidströmung in Richtung des Pfeiles PF geöffnet wird.

Der elastisch zusammendrückbare hohlzylindrische Einsetzkörper EK ist im vorliegenden Fall durch einen elastisch zusammendrückbaren hohlzylindrischen Stauchkörper EK gebildet, der, wie aus Fig. 1 und 2 hervorgeht, in seiner axialen Richtung mit voneinander in Abstand vorgesehenen und zueinander versetzt verlaufenden Querschlitzen QS versehen ist. Von diesen Querschlitzen QS, die bei einem Einsetzkörper-Außendurchmesser von etwa 30mm und einer Wandungsdicke von ca. 2mm jeweils eine Länge von z.B. 10 bis 30mm und eine Breite zwischen 1 und 2mm und einen gegenseitigen Abstand von 1 bis 2mm in Längsrichtung des Stauchkörpers EK aufweisen können, sind insbesondere unmittelbar benachbarte Querschlitze QS in dem betreffenden Stauchkörper derart versetzt, dass sie in ihren Längen zum Teil überlappt vorgesehen sind. Durch diese Anordnung der Querschlitze QS besitzt der Einsetz- bzw. Stauchkörper EK ein käfigförmiges Aussehen, weshalb er auch als Käfigkörper bezeichnet werden kann.

Die vorstehend genannten Querschlitze QS ermöglichen es, dass der Einsetz- bzw. Stauchkörper EK in seiner axialen Richtung elastisch zusammendrückbar ist. Diese elastische Zusammendrückbarkeit wird hier, wie eingangs ausgeführt, für einen vollständigen Toleranzausgleich von innerhalb eines bestimmten festgelegten Toleranzbereiches liegenden unterschiedlichen Längen von Stauchkörpern und unterschiedlich langen Abständen zwischen dem den jeweils als Ventilsitz dienenden Anlagebereich eines jeweiligen Aufnahmeteiles umgebenden Aufnahmeteilbereich, an dem hier der jeweilige Einsetzkörper EK mit seinem einen (rechten) Ende anliegt, und der Fixierung bzw. Fixierungsposition am anderen (linken) Ende des jeweiligen Einsetzkörpers in dem jeweiligen Aufnahmeteil ausgenutzt. Dadurch steht zwischen dem jeweiligen Aufnahmeteil AT und dem jeweiligen Einsetzkörper EK stets ein dichtend schließendes Rückschlagventil zur Verfügung, in welchem die Position des an dem Einsetzkörper EK vorgesehenen Dichtungsgliedes DG in Bezug auf den Anlagebereich AB des Anlageteiles AT definiert festgelegt ist. Die nach dem elastischen Zusammendrücken des Einsetzkörpers jeweils verbleibende Druckkraft dieses Einsetzkörpers drückt das Dichtungsglied sicher gegen den Anlagebereich des Aufnahmeteiles.

In seinem in axialer Längsrichtung elastisch zusammengedrückten Zustand wird der das Dichtungsglied DG tragende Einsetzkörper EK in dem Aufnahmeteil AT derart fixiert, dass das Dichtungsglied DG an dem Anlagebereich AB des Aufnahmeteiles AT stets dichtend anliegt. Für diese Fixierung des Einsetzkörpers EK in dem Aufnahmeteil AT dient hier eine Rastverbindungsanordnung, die gemäß Fig. 1 aus zwei diametral gegenüberliegenden Rastnasenteilen RN am Außenumfang des linken Endes des Einsetz- bzw. Stauchkörpers EK und aus zu diesen passenden Aufnahmenutbereichen AN im Innenumfang des Aufnahmeteiles AT gebildet ist. Das erwähnte Zusammendrücken des Einsetz- bzw. Stauchkörpers EK in dessen axialer Richtung erlaubt den zuvor beschriebenen Toleranzausgleich überdies bei einem gewünschten Rasthub zu erreichen, in welchem der Einsetz- bzw. Stauchkörper EK für ein Einrasten zusammenzudrücken ist. Um das Einrasten der Rastnasenteile RN in die Aufnahmenutbereiche AN durch eine leichte Zusammendrückbarkeit des betreffenden Endes des Einsetzkörpers EK zu unterstützen, ist in diesem Endbereich des Einsetzkörpers EK wenigstens ein Längsschlitz LS gebildet; vorzugsweise sind jedoch, wie dies aus Fig. 1 und 2 hervorgeht, paarweise vorgesehene Längsschlitze LS gebildet, die in dem gerade betrachteten Endbereich des Einsetzkörpers EK offen sind und von denen die zu jeweils einem Paar unmittelbar benachbarter Längsschlitze LS gehörenden Längsschlitze mit ihren anderen Enden aufeinanderzulaufend gebildet sind. Dies ergibt eine besonders günstige elastische Verformbarkeit des betrachteten Endbereichs des Einsetz- bzw. Stauchkörpers EK beim Einrasten der Rastverbindungsanordnung.

Zu dem Einsetz- bzw. Stauchkörper EK ist noch anzumerken, dass dieser in seiner axialen Richtung eine von seiner Innenfläche abstehende schmale Trag- bzw. Stabilisierungsrippe TR aufweist. Diese schmale Trag- bzw. Stabilisierungsrippe TR ist diametral gegenüber dem Befestigungsbereich BE des Dichtungsgliedes DG an dem Einsetzkörper EK gebildet; durch sie erhält der Einsetz- bzw. Stauchkörper EK eine besonders gute Formstabilität für die dichtende Anlage des Dichtungsgliedes DG an dem Anlagebereich AB des Aufnahmeteiles AT. Außerdem dient die betreffende Trag- bzw. Stabilisierungsrippe TR dazu, ein manuelles Herausziehen des Einsetz- bzw. Stauchkörpers EK aus dem Aufnahmeteil AT durch Druckausübung auf die Trag- bzw. Stabilisierungsrippe TR mittels eines Fingers zu erleichtern.

Im linken Teil der Fig. 1 und 2 ist ausschnittweise noch ein Anschlussschlauchteil AS eines so genannten Wellschlauches dargestellt, welcher ohne eine Muffe oder dergleichen Anpassungsglied direkt im Anschluss an den Einsetzkörper EK in das rohrförmige Aufnahmeteil AT eingesetzt und in diesem mittels eines Dichtungsrings DR dicht festgeklemmt ist. Damit nimmt das Aufnahmeteil AT in aufwandsparender Weise also sowohl den Einsetz- bzw. Stauchkörper EK als auch das Anschlussschlauchteil AS auf, ohne dass es für deren Befestigung noch weiterer Befestigungselemente, wie z.B. Manschetten oder Ringe, bedarf. Der Dichtungsring DR, der aus einem weichelastischen Material, wie aus Gummi oder Kunststoff bestehen kann, ist im vorliegenden Fall von einer Ringaufnahmenut RA im Umfang des Anschlussschlauchteiles AS aufgenommen; er wird nach dem Einsetzen des Anschlussschlauchteiles AS in den Tragkörper TR zusammengedrückt. Das Anschlussschlauchteil AS kann selbst ein Kunststoffteil sein, an dessen in Fig. 1 und 2 links dargestellten Ende ein Faltenbalgbereich FB vorgesehen ist, der eine relativ flexible Verbindung des Anschlussschlauchteiles AS mit einem ortsfest angeordneten Verbindungs- oder Ableitrohr (nicht dargestellt) ermöglicht.

Vorstehend ist die Vorrichtung gemäß der vorliegenden Erfindung an einem bevorzugten Ausführungsbeispiel erläutert worden. Es dürfte jedoch einzusehen sein, dass die vorliegende Erfindung auf die in den Fig. 1 und 2 gezeigte Ausführungsform nicht beschränkt ist, sondern in vielerlei Weise abgewandelt werden kann. So kann der elastisch zusammendrückbare hohlzylindrische Einsetzkörper EK durch einen anderen Einsetzkörper als den vorstehend betrachteten käfigförmigen Stauchkörper gebildet sein, beispielsweise durch einen eine Eigenelastizität aufweisenden schwammartigen Kunststoff-Einsetzkörper ohne irgendwelche Schlitze. Auch die Rastverbindungsanordnung kann an anderer Stelle längs des Einsetzkörpers EK und/oder in anderer Weise realisiert sein, als dies unter Bezugnahme auf Fig. 1 erläutert worden ist. So können die Rastnasenteile RN am Innenumfang des Aufnahmeteiles AT und die Aufnahmenutbereiche AN im Außenumfang des Einsetzkörpers EK vorgesehen sein. Außerdem kann die Rastverbindungsanordnung beispielsweise dadurch gebildet sein, dass im Innenumfang des Aufnahmeteiles AT eine geschlossene Nut vorgesehen ist und dass der Rastnasenbereich durch eine vom Außenumfang des Einsetzkörpers EK getragene, vorzugsweise umlaufende Rastnase gebildet ist. Alternativ dazu ist es aber auch möglich, dass die Aufnahmenut im Außenumfang des Einsetzkörpers EK als geschlossene umlaufende Nut gebildet ist und dass der Rastnasenbereich durch eine vom Innenumfang des Aufnahmeteiles AT getragene, vorzugsweise umlaufende Rastnase gebildet ist.

Auch die Festlegung des in Fig. 1 und 2 rechts liegenden Endes des Einsetzkörpers EK in dem Aufnahmeteil AT kann anders als beschrieben erfolgen. So können beispielsweise vom Einsetzkörper EK und vom Aufnahmeteil AT radial abstehende, für eine Anlage aneinander im zusammengebauten Zustand der Vorrichtung ausgerichtete gesonderte Anlageelemente vorgesehen sein, um die Position des an dem Einsetzkörper EK vorgesehenen Dichtungsgliedes DG in Bezug auf den Anlagebereich AB des Aufnahmeteiles AT in gewünschter Weise festzulegen.

Abschließend sei noch angemerkt, dass die Vorrichtung gemäß der vorliegenden Erfindung nicht nur bei einem Hausgerät, und zwar insbesondere bei einer Geschirrspülmaschine anwendbar ist, sondern generell zum Abdichten eines rohrförmigen Teiles, durch das ein Fluid (Flüssigkeit oder Gas) hindurchleitbar ist, verwendbar ist, um mit dem zwischen dem Aufnahmeteil AT und dem Einsetzkörper EK gebildeten Rückschlagventil eine Fluidströmung in lediglich einer Strömungsrichtung durch das rohrförmige Teil zu ermöglichen, in der dazu entgegengesetzten Richtung jedoch zu versperren.

### Bezugszeichenliste

- AB: Anlagebereich
- AN: Aufnahmenutbereich
- AS: Anschlussschlauchteil
- AT: Aufnahmeteil
- BE: Befestigungsbereich
- DG: Dichtungsglied
- DO: Dom
- DR: Dichtungsring
- EK: Einsetzkörper, Stauchkörper
- FB: Faltenbalgbereich
- LS: Längsschlitze
- PF: Pfeil
- QS: Querschlitze
- RA: Ringaufnahmenut
- RN: Rastnasenteil
- TR: Trag- bzw. Stabilisierungsrippe

## Patentansprüche

1. Vorrichtung zum Sperren eines Fluiddurchtritts in einer festgelegten Richtung durch ein insbesondere in einem mit einem Fluid arbeitenden Hausgerät vorgesehenes rohrförmiges Teil (AT), durch das das Fluid in zu der festgelegten Richtung entgegengesetzten Richtung (PF) hindurchleitbar ist, mit einem Rückschlagventil (DG, AB), welches ein in eine Verschluss- und eine Offenstellung bringbares Dichtungsglied (DG) und einen als Ventilsitz dienenden Anlagebereich (AB) aufweist, der in einem Fluiddurchgang des rohrförmigen Teiles (AT) gebildet ist,
**dadurch gekennzeichnet,**
**dass** das rohrförmige Teil (AT) als Aufnahmeteil (AT) für die Aufnahme eines elastisch zusammendrückbaren hohlzylindrischen Einsetzkörpers (EK) derart ausgebildet ist, dass der in das Aufnahmeteil (AT) eingesetzte Einsetzkörper (EK) an dem den Anlagebereich (AB) umgebenden Bereich des Aufnahmeteiles (AT) anliegt, wobei der eingesetzte Einsetzkörper (EK) an seinem dem Anlagebereich (AB) des Fluiddurchgangs gegenüberliegenden Ende das Dichtungsglied (DG) trägt, und wobei der Einsetzkörper (EK) in dem Aufnahmeteil (AT) so fixiert ist, dass er in seiner axialen Richtung elastisch zusammengedrückt ist, so dass das Dichtungsglied (DG) durch den Einsetzkörper (EK) an dem Anlagebereich (AB) derart dichtend anliegt, dass ein Fluiddurchtritt lediglich in Richtung von dem Aufnahmeteil (AT) zu dem Einsetzkörper (EK) hin ermöglicht, in der die genannte festgelegte Richtung darstellenden Gegenrichtung jedoch sicher gesperrt ist.

2. Vorrichtung nach Anspruch 1, **dadurch gekennzeichnet, dass** der Einsetzkörpers (EK) an seinem dem Anlagebereich (AB) des Fluiddurchgangs gegenüberliegenden Ende das Dichtungsglied (DG) schwenkbar trägt.

3. Vorrichtung nach Anspruch 1 oder 2, **dadurch gekennzeichnet, dass** der Einsetzkörper (EK) in seiner axialen Richtung in dem Aufnahmeteil (AT) durch eine Rastverbindungsanordnung (RN, AN) fixiert ist.

4. Vorrichtung nach Anspruch 3, **dadurch gekennzeichnet, dass** die Rastverbindungsanordnung (RN, AN) dadurch gebildet ist, dass in dem Aufnahmeteil (AT) wenigstens ein Aufnahmenutbereich (AN) vorgesehen ist, in den der Einsetzkörper (EK) mit einem entsprechenden Rastnasenteil (RN) eingerastet ist.

5. Vorrichtung nach Anspruch 3, **dadurch gekennzeichnet, dass** die Rastverbindungsanordnung (RN, AN) dadurch gebildet ist, dass an dem Aufnahmeteil (AT) wenigstens ein Rastnasenteil (RN) vorgesehen ist, welches in einen in dem Einsetzkörper (EK) vorgesehenen Aufnahmenutbereich (AN) eingerastet ist.

6. Vorrichtung nach Anspruch 4, **dadurch gekennzeichnet, dass** der Aufnahmenutbereich (AN) im Innenumfang des Aufnahmeteiles (AT) als geschlossene Nut vorgesehen ist und dass das Rastnasenteil (RN) durch eine von dem Außenumfang des Einsetzkörpers (EK) getragene Rastnase (RN) gebildet ist.

7. Vorrichtung nach Anspruch 5, **dadurch gekennzeichnet, dass** der Aufnahmenutbereich im Außenumfang des Einsetzkörpers (EK) als geschlossene Nut gebildet ist und dass das Rastnasenteil (RN) durch eine im Innenumfang des Aufnahmeteiles (AT) getragene Rastnase (RN) gebildet ist.

8. Vorrichtung nach einem der Ansprüche 1 bis 7, **dadurch gekennzeichnet, dass** der elastisch zusammendrückbare hohlzylindrische Einsetzkörper (EK) durch einen elastisch zusammendrückbaren hohlzylindrischen Stauchkörper (EK) mit in dessen axialer Richtung voneinander in Abstand vorgesehenen und zueinander quer zur Stauchkörperlängsrichtung versetzt verlaufenden Querschlitzen (QS) gebildet ist.

9. Vorrichtung nach Anspruch 8, **dadurch gekennzeichnet, dass** in Stauchkörperlängsrichtung unmittelbar benachbarte Querschlitze (QS) in dem elastisch zusammendrückbaren Stauchkörper (EK) voneinander versetzt sind.

10. Vorrichtung nach einem der Ansprüche 3 bis 7 in Verbindung mit Anspruch 8 oder 9, **dadurch gekennzeichnet, dass** der Stauchkörper (EK) im Bereich der Rastverbindungsanordnung (RN, AN) wenigstens einen im wesentlichen in axialer Stauchkörperrichtung verlaufenden Längsschlitz (LS) aufweist.

11. Vorrichtung nach Anspruch 10, **dadurch gekennzeichnet, dass** der jeweilige Längsschlitz (LS) zu dem das Dichtungsglied (DG) enthaltenden einen Ende des Stauchkörpers (EK) gegenüberliegenden Stauchkörperende offen ist.

12. Vorrichtung nach einem der vorhergehenden Ansprüche, **dadurch gekennzeichnet, dass** das Dichtungsglied (DG) tellerförmig ausgebildet ist und an einem zumindest angenähert runden Anlagebereich (AB) des Aufnahmeteiles (AT) anliegt.

13. Vorrichtung nach einem der vorhergehenden Ansprüche, **dadurch gekennzeichnet, dass** das Dichtungsglied (DG) aus einem weichelastischen Material besteht und dass das Aufnahmeteil (AT) mit seinem Anlagebereich (AB) aus einem harten oder zähelastischen Material besteht.

14. Hausgerät, welches mit einem Fluid arbeitet, insbesondere Geschirrspülmaschine, mit einer Vorrichtung nach einem der Ansprüche 1 bis 13.

## Claims

1. Device for blocking passage of a fluid in a defined direction through a tubular part (AT) provided in particular in a household appliance operating with a fluid, through which part the fluid can be conducted in a direction (PF) opposite to the defined direction, the device comprising a check valve (DG, AB) which has a sealing element (DG) that can be brought to a closing and an open position and a contact region (AB) serving as a valve seat and formed in a fluid passage of the tubular part (AT),
**characterised in that**
the tubular part (AT) is embodied as a receiving part (AT) for receiving an elastically compressible hollow cylindrical insertion body (EK) such that the insertion body (EK) inserted into the receiving part (AT) bears against the region of the receiving part (AT) which surrounds the contact region (AB), wherein the inserted insertion body (EK) carries the sealing element (DG) at its end opposite the contact region (AB) of the fluid passage and wherein the insertion body (EK) is fixed in the receiving part (AT) such that it is elastically compressed in its axial direction so that the sealing element (DG) bears against the contact region (AB) by means of the insertion body (EK) so that a passage of fluid is made possible only in the direction from the receiving part (AT) to the insertion body (EK), while it is reliably blocked in the direction representing the opposite direction to the said defined direction.

2. Device according to claim 1, **characterised in that** the insertion body (EK) carries the sealing element (DG) in a pivotable manner at its end opposite the contact region (AB) of the fluid passage.

3. Device according to claim 1 or 2, **characterised in that** the insertion body (EK) is fixed in its axial direction in the receiving part (AT) by means of a snap-fit connection arrangement (RN, AN).

4. Device according to claim 3, **characterised in that** the snap-fit connection arrangement (RN, AN) is formed **in that** at least one receiving groove region (AN) into which the insertion body (EK) is engaged by means of a corresponding snap-fit latch part (RN) is provided in the receiving part (AT).

5. Device according to claim 3, **characterised in that** the snap-fit connection arrangement (RN, AN) is formed **in that** at least one snap-fit latch part (RN) which is engaged in a receiving groove region (AN) provided in the insertion body (EK) is provided on the receiving part (AT).

6. Device according to claim 4, **characterised in that** the receiving groove region (AN) is provided as a closed groove in the inner circumference of the receiving part (AT) and **in that** the snap-fit latch part (RN) is formed by means of a snap-fit latch (RN) carried by the outer circumference of the insertion body (EK).

7. Device according to claim 5, **characterised in that** the receiving groove region is formed as a closed groove in the outer circumference of the insertion body (EK) and **in that** the snap-fit latch part (RN) is formed by means of a snap-fit latch (RN) carried in the inner circumference of the receiving part (AT).

8. Device according to one of claims 1 to 7, **characterised in that** the elastically compressible hollow cylindrical insertion body (EK) is formed by means of an elastically compressible hollow cylindrical compression body (EK) having, in its axial direction, transverse slots (QS) provided spaced apart from one another and running offset with respect to one another transversely to the longitudinal direction of the compression body.

9. Device according to claim 8, **characterised in that** transverse slots (QS) immediately adjacent to one another in the longitudinal direction of the compression body are offset from one another in the elastically compressible compression body (EK).

10. Device according to one of claims 3 to 7 in conjunction with claim 8 or 9, **characterised in that** in the region of the snap-fit connection arrangement (RN, AN) the compression body (EK) has at least one longitudinal slot (LS) running essentially in the axial direction of the compression body.

11. Device according to claim 10, **characterised in that** the respective longitudinal slot (LS) is open toward the end of the compression body opposite the end of the compression body (EK) containing the sealing element (DG).

12. Device according to one of the preceding claims, **characterised in that** the sealing element (DG) is embodied as saucer-shaped and bears against an at least approximately round contact region (AB) of the receiving part (AT).

13. Device according to one of the preceding claims, **characterised in that** the sealing element (DG) consists of a soft-elastic material and that the receiving part (AT) with its contact region (AB) consists of a hard or viscoplastic material.

14. Household appliance which operates with a fluid, in particular a dishwasher, having a device according to one of claims 1 to 13.

## Revendications

1. Dispositif de blocage d'un passage de fluide dans une direction déterminée au moyen d'une pièce tubulaire (AT) notamment ménagée dans un appareil ménager fonctionnant avec un fluide, à travers laquelle le fluide peut être dirigé en la traversant dans la direction (PF) inverse à la direction déterminée, comprenant un clapet anti-retour (DG, AB) lequel présente un organe d'étanchéité (DG) pouvant être mis dans une position de fermeture et dans une position d'ouverture, et une zone d'appui (AB) servant de siège de soupape, laquelle est formée dans un passage de fluide de la pièce tubulaire (AT),
**caractérisé en ce**
**que** la pièce tubulaire (AT) est réalisée comme pièce de logement (AT) pour le logement d'un corps d'insertion (EK) cylindrique creux élastiquement compressible, de manière à ce que le corps d'insertion (EK) inséré dans la pièce de logement (AT) soit adjacent à la zone de la pièce de logement (AT) entourant la zone d'appui (AB), le corps d'insertion (EK) inséré portant l'organe d'étanchéité (DG) sur son extrémité opposée à la zone d'appui (AB) du passage de fluide, et le corps d'insertion (EK) étant fixé dans la pièce de logement (AT) de manière à ce qu'il soit élastiquement comprimé dans sa direction axiale, de sorte que l'organe d'étanchéité (DG) soit adjacent à la zone d'appui (AB) en raison du corps d'insertion (EK) en étanchéifiant de manière à ce qu'un passage de fluide soit uniquement rendu possible en direction allant de la pièce de logement (AT) vers le corps d'insertion (EK), dans laquelle la direction inverse représentant ladite direction déterminée est cependant bloquée de manière fiable.

2. Dispositif selon la revendication 1, **caractérisé en ce que** le corps d'insertion (EK) porte l'organe d'étanchéité (DG) de manière pivotante sur son extrémité opposée à la zone d'appui (AB) du passage de fluide.

3. Dispositif selon la revendication 1 ou 2, **caractérisé en ce que** le corps d'insertion (EK) est fixé dans sa direction axiale dans la pièce de logement (AT) au moyen d'un agencement de liaison à encliquetage (RN, AN).

4. Dispositif selon la revendication 3, **caractérisé en ce que** l'agencement de liaison à encliquetage (RN, AN) est réalisé du fait qu'au moins une zone de rainure de logement (AN) est ménagée dans la pièce de logement (AT), dans laquelle zone de rainure de logement le corps d'insertion (EK) est encliqueté à l'aide d'une pièce d'ergot d'encliquetage (RN) correspondante.

5. Dispositif selon la revendication 3, **caractérisé en ce que** l'agencement de liaison à encliquetage (RN, AN) est réalisé du fait qu'au moins une pièce d'ergot d'encliquetage (RN) est ménagée sur la pièce de logement (AT), laquelle pièce d'ergot d'encliquetage est encliquetée dans une zone de rainure d'encliquetage (AN) ménagée dans le corps d'insertion (EK).

6. Dispositif selon la revendication 4, **caractérisé en ce que** la zone de rainure d'encliquetage (AN) est ménagée dans la circonférence intérieure de la pièce de logement (AT) en tant que rainure fermée, et **en ce que** la pièce d'ergot d'encliquetage (RN) est formée par un ergot d'encliquetage (RN) porté par la circonférence extérieure du corps d'insertion (EK).

7. Dispositif selon la revendication 5, **caractérisé en ce que** la zone de rainure d'encliquetage est formée dans la circonférence extérieure du corps d'insertion (EK) en tant que rainure fermée, et **en ce que** la pièce d'ergot d'encliquetage (RN) est formée par un ergot d'encliquetage (RN) porté dans la circonférence intérieure de la pièce de logement (AT).

8. Dispositif selon l'une quelconque des revendications 1 à 7, **caractérisé en ce que** le corps d'insertion (EK) cylindrique creux élastiquement compressible est formé par un corps de compression (EK) cylindrique creux élastiquement compressible doté de fentes transversales (QS) ménagées à écart les unes des autres dans sa direction axiale et s'étendant de manière décalée les unes des autres transversalement au sens longitudinal du corps de compression.

9. Dispositif selon la revendication 8, **caractérisé en ce que** des fentes transversales (QS) directement avoisinantes sont décalées les unes des autres dans le corps de compression (EK) élastiquement compressible dans le sens longitudinal du corps de compression.

10. Dispositif selon l'une quelconque des revendications 3 à 7 en relation avec la revendication 8 ou 9, **caractérisé en ce que** le corps de compression (EK) présente dans la partie de l'agencement de liaison d'encliquetage (RN, AN) au moins une fente longitudinale (LS) s'étendant essentiellement en direction axiale du corps de compression.

11. Dispositif selon la revendication 10, **caractérisé en ce que** la fente longitudinale (LS) respective est ouverte en direction de l'extrémité du corps de compression opposée à l'extrémité du corps de compression (EK) contenant l'organe d'étanchéité (DG).

12. Dispositif selon l'une quelconque des revendications précédentes, **caractérisé en ce que** l'organe d'étanchéité (DG) est réalisé en forme de plateau et est adjacent à une zone d'appui (AB), au moins approximativement ronde, de la pièce de logement (AT).

13. Dispositif selon l'une quelconque des revendications précédentes, **caractérisé en ce que** l'organe d'étanchéité (DG) est constitué d'une matière élastique souple et **en ce que** la pièce de logement (AT), avec sa zone d'appui (AB), est constituée d'une matière dure ou viscoplastique.

14. Appareil ménager, lequel fonctionne avec un fluide, notamment lave-vaisselle, comprenant un dispositif selon l'une quelconque des revendications 1 à 13.
